# EUROPÄISCHE PATENTSCHRIFT

(11) **EP 3 184 279 B1**
(45) Veröffentlichungstag und Bekanntmachung des Hinweises auf die Patenterteilung: **04.09.2019**
(21) Anmeldenummer: 16204553.8
(22) Anmeldetag: 15.12.2016
(51) Int. Cl.: B29C 45/27

(54) **SPRITZGIESSDÜSE MIT EINEM EINSATZ**
INJECTION MOULDING NOZZLE COMPRISING AN INSERT
BUSE DE MOULAGE PAR INJECTION COMPRENANT UN INSERT

(30) Priorität: 22.12.2015 DE 102015122655
(43) Veröffentlichungstag der Anmeldung: 28.06.2017
(73) Patentinhaber: GÜNTHER Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(56) Entgegenhaltungen:
- CN-A- 101 941 274
- DE-A1-102008 015 939
- DE-U1-202006 007 721
- US-A1- 2009 148 550
- US-A1- 2010 092 601
- US-A1- 2010 227 019
- US-A1- 2015 246 471
- US-B1- 6 609 902

## Beschreibung

Die Erfindung betrifft eine Spritzgießdüse gemäß Anspruch 1.

Spritzgießdüsen, insbesondere Heißkanaldüsen, werden in Spritzgießwerkzeugen eingesetzt, um eine fließfähige Masse, beispielsweise ein Kunststoffmaterial, bei einer vorgegebenen Temperatur unter hohem Druck einem trennbaren Formeinsatz zuzuführen. Sie haben meist ein Materialrohr mit einem Strömungskanal, der über eine Einlassöffnung mit einem Verteilerkanal in einer Verteilerplatte strömungsverbunden ist und über eine Auslassöffnung in der Angussöffnung des Formeinsatzes (Formnest) mündet.

Damit sich das fließfähige Material innerhalb des Strömungskanals der Heißkanaldüse nicht vorzeitig abkühlt, ist eine Heizvorrichtung vorgesehen, die außen auf das Materialrohr aufgesetzt oder aufgebracht ist. Um ferner zu erreichen, dass die fließfähige Masse bis an die Angussöffnung heran auf einer gleichmäßigen Temperatur gehalten wird, ist endseitig in dem Materialrohr eine Wärmeleithülse aus einem hochwärmeleitfähigen Material eingesetzt, die den Strömungskanal fortsetzt und endseitig die Auslassöffnung für die Spritzgießdüse bildet.

Bei einer offenen Düse ist die Wärmeleithülse meist als Düsenmundstück ausgebildet und mit einer Düsenspitze versehen, die mit ihrer kegelförmigen Spitze in oder kurz vor der Ebene der Angussöffnung endet. Bei einer Nadelverschlussdüse ist endseitig in der Auslassöffnung der Wärmeleithülse ein Dichtsitz für eine Verschlussnadel ausgebildet, die mittels eines Nadelantriebs zwischen einer Öffnungs- und einer Schließstellung hin und her bewegbar ist.

Bei der Verarbeitung von abrasiven Materialien oder von Spritzgießmassen, die mit abrasiven Bestandteilen gefüllt sind, kann es an der Wärmeleithülse, insbesondere an der Auslassöffnung zu starkem Verschleiß kommen, so dass die Wärmeleithülse oder-je nach Konstruktion -die gesamte Heißkanaldüse relativ häufig ausgetauscht werden muss. Insbesondere bei Nadelverschlussdüsen entstehen Beschädigungen am Dichtsitz für die Verschlussnadel, so dass diese bei der periodischen Bewegung von einer Öffnungs- in eine Schließstellung nicht mehr exakt geführt werden kann und die Auslassöffnung nicht mehr dicht geschlossen wird.

Um diesen Verschleiß zu vermeiden, schlägt WO 2005/018906 A1 einen Einsatz vor, der vorzugsweise aus verschleißfestem Material ausgeführt ist. Dieser ist an dem formeinsatzseitigen Ende eines Düsenmundstücks angeordnet und entweder an sich oder zusammen mit dem Düsenmundstück längsverschieblich ausgebildet. Während des Betriebes der Spritzgießdüse ist der Einsatz zwischen dem Düsenkörper und dem Formeinsatz eingeklemmt. Der Einsatz dient dem Schutz des Düsenmundstücks vor starkem Verschleiß und optimiert die Nadelführung bei Nadelverschlussdüsen, da er sowohl für die Verschlussnadel als auch für die Düse als Zentrierkörper fungiert.

Nachteilig hierbei ist, dass der Einsatz nur aus einem einheitlichen Material gefertigt werden kann. Der Einsatz besteht daher entweder aus verschleißfestem Material oder man verwendet - wie in einer anderen Ausführungsform der WO 2005/018906 A1 - hochwärmeleitfähiges Material.

Spritzgießdüsen mit einem Einsatz umfassend unterschiedliche Materialien sind aus den Dokumenten US 2015/246471 A1, US 2010/092601 A1, CN 101 941 274 A und DE 10 2008 015939 A1 bekannt.

Auch WO 2003/070446 A1 schlägt einen Einsatz vor, der als Ventilnadelführung und als Verschleißschutzmittel fungiert. Neben der bereits aus WO 2005/018906 A1 bekannten Ausführungsform mit einem entweder aus thermisch isolierendem oder thermisch leitfähigem Material hergestellten einstückigen Einsatz, schlägt WO 2003/070446 A1 eine zweiteilige Ausführungsform des Einsatzes vor, bei der die zwei Einzelteile des Einsatzes unterschiedliche Materialeigenschaften aufweisen können. Dabei wird beispielsweise ein äußeres Teil (Isolierungsteil) aus einem thermisch isolierenden Material und ein Innenteil (Führungsteil) aus einem thermisch leitfähigen Material oder aus einem abnutzungsbeständigen Material, vorgeschlagen. Das thermisch isolierende Material wird verwendet, um die Wärmeverluste zum Formeinsatz zu reduzieren und das thermisch leitfähige Material wird verwendet, um Wärme von der Spitze zu der Schmelze in der Führungsöffnung zu leiten.

Nachteilig bei dieser Ausführungsform ist, dass die Einzelteile des Einsatzes separat aus den verschiedenen Materialien hergestellt und einzeln in der Spritzgießdüse montiert werden müssen. Auch müssen bei einem notwendigen Austausch beide Teile separat entnommen werden. Dies erhöht den Arbeitsaufwand und die Montagekosten. Ferner kann es vorkommen, dass sich die beiden Einzelteile unterschiedlich stark abnutzen, was in der Handhabung unpraktisch ist und zusätzlichen Aufwand bei der Wartung und Kontrolle des Spritzgießwerkzeugs verursacht. Ein weiterer Nachteil besteht darin, dass die zwei- oder mehrteiligen Einsätze relativ große Abmessungen aufweisen, was sich ungünstig auf die Baugröße der Heißkanaldüse und damit ungünstig auf die realisierbaren Stichmaße bzw. Nestabstände auswirkt.

Ziel der Erfindung ist es, diese und weitere Nachteile des Standes der Technik zu überwinden und einen kompakten Einsatz für eine Spritzgießdüse zu schaffen, der in einem einzigen Bauteil mehrere Materialeigenschaften nutzbar macht sowie eine geringe Baugröße der Spritzgießdüse ermöglicht. Er soll insbesondere bei geringen Abmessungen mit einfachen Mitteln kostengünstig aufgebaut und innerhalb des Werkzeugs leicht zu handhaben sein. Der Einsatz soll ferner der hohen Wechselbelastung durch Abkühlung und Aufheizen dauerhaft standhalten.

Hauptmerkmale der Erfindung sind im kennzeichnenden Teil von Anspruch 1 angegeben. Ausgestaltungen sind Gegenstand der Ansprüche 2 bis 5.

Bei einem Einsatz für eine Spritzgießdüse, mit einem Einsatzkörper, der ein rückwärtiges Ende und ein vorderes Ende aufweist und in dem zwischen dem rückwärtigen Ende und dem vorderen Ende wenigstens ein Strömungskanal ausgebildet ist, wobei der Einsatzkörper einen ersten Teil zum Anordnen des Einsatzes an oder in der Spritzgießdüse und einen zweiten Teil zum Anordnen an oder in einem Formeinsatz aufweist, sieht die Erfindung vor, dass der erste Teil aus einem ersten Material gefertigt ist und sich von dem rückwärtigen Ende des Einsatzkörpers bis zu einer Kontaktfläche erstreckt und dass der zweite Teil aus einem von dem ersten Material verschiedenen Material gefertigt ist und sich von der Kontaktfläche bis zum vorderen Ende des Einsatzkörpers erstreckt, wobei der erste Teil und der zweite Teil in und/oder entlang der Kontaktfläche miteinander verbunden sind.

Damit ist es möglich, in nur einem einzigen Bauteil, das beispielsweise in das untere, formnestseitige Ende eines Materialrohrs oder einer Wärmeleithülse der Spritzgießdüse eingesetzt ist, mehrere Materialeigenschaften zu kombinieren und für die Spritzgießdüse und das zu verarbeitende fließfähige Material zu nutzen, ohne dass mehrere verschiedene Bauteile benötigt und montiert werden müssen. Dabei können die verschiedenen Materialien frei gewählt und zusammengestellt werden, um den jeweiligen Anforderungen an den Einsatz und die jeweilige Spritzgießdüse zu entsprechen. Beispielsweise ist es möglich, den ersten Teil des Einsatzes aus einem hochwärmeleitfähigen Material zu fertigen, um die von einer Heizung der Spritzgießdüse erzeugte Wärme möglichst weit bis an die Angussöffnung heranzubringen. Der zweite Teil hingegen kann aus einem verschleißfesten Material gefertigt sein, um den Verschleiß des Einsatzes zu verringern und damit die Standzeit der Spritzgießdüse zu erhöhen, insbesondere wenn der zweite Teil des Einsatzes den Dichtsitz für eine Verschlussnadel bildet.

Der erste Teil und der zweite Teil des Einsatzes können vorteilhaft als separate Teile gefertigt werden, die nach der Fertigung präzise und fest miteinander verbunden werden. Alternativ ist es auch möglich, zunächst einen Rohling aus einem Verbundstoff des ersten und zweiten Materials herzustellen und anschließend den Einsatz aus diesem Verbundstoff zu fertigen. Durch die Verbindung der aus zwei unterschiedlichen Materialien bestehenden Teile des Einsatzes können die vorteilhaften Eigenschaften der Materialien punktgenau und auf kleinstem Bauraum bestmöglich genutzt werden. Ein kosten- und wartungsintensiver Einbau zweier Einzelteile wird vermieden. Ebenso sind zwischen den beiden Teilen keine aufwendigen Dichtungselemente oder Dichtflächen notwendig, die ggf. zu Leckagen an oder in der Spritzgießdüse bzw. im Werkzeug führen könnten. Die beiden Teile sind vielmehr stets fest miteinander verbunden und der Einsatz bildet in der Handhabung ein einheitliches Bauteil mit minimalen Abmessungen.

Die Verbindung erstreckt sich aufgrund der Kontaktfläche zwischen den beiden verwendeten Materialien, sodass zwar die Eigenschaften beider Materialien in einem Bauteil kombiniert werden, gleichzeitig aber eine klare Begrenzung der Materialien auf die verschiedenen Teile gewährleistet ist. Eine Mischung der beiden Stoffe außerhalb der Kontaktfläche wird vermieden. Dies trägt zur optimalen und präzisen Nutzung der Materialien bei der Verwendung eines Einsatzes in einer Spritzgießdüse bei.

Ausführungsformen der Erfindung sehen vor, dass der erste Teil und der zweite Teil stoffschlüssig, formschlüssig oder reibschlüssig miteinander verbunden sind. Mit einer stoffschlüssigen Verbindung lassen sich minimale Abmessungen erzielen. Denkbar sind aber auch mechanische Verbindungen in Form eines Formschlusses oder eines Reibschlusses, beispielsweise durch Verrasten, Verschrauben, Verpressen oder Schrumpfen.

Aufgrund des beschränkten Bauraums ist es insbesondere vorteilhaft, wenn der erste und der zweite Teil mittels Schweißen, vorzugsweise mittels Diffusionsschweißen oder Laserschweißen, stoffschlüssig miteinander verbunden sind.

Zum Ausbilden stoffschlüssiger Verbindungen kommen neben dem Schweißen auch Verfahren wie Löten oder Kleben in Frage. Als optimales Verfahren zur Verbindung des ersten und des zweiten Teils hat sich das Schweißen erwiesen, weil der erste und der zweite Teil meist aus einem Metallwerkstoff ausgebildet sind und durch Schweißen eine zuverlässige und dauerhaft stabile Verbindung zwischen den Teilen ausgebildet werden kann. Insbesondere das Diffusionsschweißen weist dabei Vorteile gegenüber anderen Schweißmethoden auf. Die Qualität der Schweißverbindungen ist außerordentlich hoch. Es entsteht ein porenfreier, dichter Werkstoffverbund, der höchsten mechanischen, thermischen und korrosionstechnischen Anforderungen gerecht wird. Dabei muss beim Diffusionsschweißens kein Zusatzwerkstoff verwendet werden, so dass die Fügenaht keine Fremdlegierungsbestandteile aufweist und somit bei optimaler Ausführung grundwerkstoffähnliche Eigenschaften besitzt. Durch das Fehlen einer schmelzflüssigen Phase im Fügeprozess kann zudem eine hochgenaue und konturgetreue Verschweißung gewährleistet werden.

Alternativ kann der erste Teil mittels einer mechanischen Verbindungsanordnung mit dem zweiten Teil verbunden sein. Hierzu kann unter anderem eine Rastverbindung, eine Schraubverbindung, eine Pressverbindung oder eine Bajonettverbindung genutzt werden. Beide Teil können auch durch Schrumpfen miteinander verbunden werden. Alle vorgenannten Verbindungsarten haben den Vorteil, dass eine solche Verbindung des ersten Teils mit dem zweiten Teil dauerhaft fest und dicht ausgebildet ist.

Besonders vorteilhaft ist es, wenn es sich nach weiteren Ausführungsformen bei dem ersten Material des ersten Teils um ein hoch wärmeleitfähiges Material und bei dem zweiten Material des zweiten Teils um ein verschleißfestes Material handelt. Hierdurch kann einerseits - z.B. im Bereich einer Nadelführung - der Verschleiß des Einsatzes aufgrund des wiederholten Abgleitens der Ventilnadel entlang der Innenwände des Strömungskanals im Wirkbetrieb der Spritzgießdüse verringert werden. Gleichzeitig gewährleistet eine hoch wärmeleitfähige Ausführung des ersten Teils des Einsatzes, welcher beispielsweise an einer Wärmeleithülse angeordnet sein kann, eine optimale Temperaturverteilung im Angussbereich.

Dabei hat es sich als vorteilhaft erwiesen, wenn das wärmeleitfähige Material und das verschleißfeste Material eine hohe Wärmeausdehnung aufweisen. Durch die Verwendung eines Materials mit hoher Wärmeausdehnung, dehnt sich der Einsatz beim Aufheizen des Spritzgießwerkzeugs gezielt aus, so dass der Einsatz nach Erreichen der Betriebstemperatur der Spritzgießdüse optimal zwischen Materialrohr und/oder Wärmeleithülse einerseits und Formeinsatz andererseits eingeklemmt ist und eine dauerhaft dichte Anordnung bildet.

In einer weiteren vorteilhaften Bauform weisen das Material des ersten Teils und das Material des zweiten Teils einen identischen oder annähernd gleichen Ausdehnungskoeffizient auf.

Sind die Ausdehnungskoeffizienten der beiden Teile des Einsatzes unterschiedlich, berücksichtigt die Differenz zwischen den thermischen Ausdehnungskoeffizienten des wärmeleitfähigen und des verschleißfesten Materials die elastischen Kapazitäten der Verbindung zwischen dem erstem und dem zweitem Teil, so dass die beiden Teile des Einsatzes stets dauerhaft und fest miteinander verbunden sind.

In einer speziellen Ausführungsform ist das verschleißfeste Material ein Werkzeugstahl. Dieser zeichnet sich durch seine guten Verschleißschutzeigenschaften aus. Dabei ist Werkzeugstahl kostengünstiger als andere Materialien mit vergleichbaren Verschleißschutzeigenschaften. Hierbei kann insbesondere ein Werkzeugstahl mit einer niedrigen Wärmeleitfähigkeit vorteilhaft sein, weil in diesem Fall eine thermische Trennung der Kunststoffschmelze von dem Formeinsatz des Spritzgusswerkzeugs erfolgt, was ein vorzeitiges Abkühlen der Kunststoffschmelze im Bereich des zweiten Abschnitts vermeidet. Alternativ könnte auch eine Keramik, welche sich durch eine hohe Verschleißfestigkeit und geringe thermische Leitfähigkeit auszeichnet, als verschleißfestes Material eingesetzt werden.

Eine noch andere Ausführungsform der Erfindung sieht vor, dass sich die Kontaktfläche, entlang der der erste Teil mit dem zweiten Teil verbunden ist, senkrecht oder schräg zur Längsachse des Einsatzkörpers erstreckt. Dadurch ergibt sich beispielsweise eine scheibenförmige Kontaktfläche mit minimaler Ausdehnung. Durch den senkrechten Verlauf der Kontaktfläche kann eine optimale Verbindung zwischen dem ersten und dem zweiten Teil hergestellt werden. Alternativ hierzu kann sich die Kontaktfläche auch schräg zur Längsachse des Einsatzkörpers erstrecken, beispielsweise wenn eine größere Kontaktfläche gewünscht ist. Letztere kann beispielsweise konisch ausgebildet sein. Durch eine schräg zur Längsachse ausgerichtete Kontaktfläche lässt sich insbesondere eine stoffschlüssige Verbindung verstärken, da in diesem Fall ein größerer Abschnitt als Kontaktfläche zur Verfügung steht.

In einer vorteilhaften Ausgestaltung der Erfindung ist der Einsatz rotationssymmetrisch zu einer Längsachse ausgebildet und er weist einen ersten Abschnitt, einen Flansch sowie einen zweiten Abschnitt auf. Dabei kann der erste Abschnitt und/oder der zweite Abschnitt als Hals ausgebildet sein, sodass der Einsatz mit seinem ersten Abschnitt optimal an das Materialrohr, das Düsenmundstück oder die Wärmeleithülse einer Spritzgießdüse angepasst werden kann und somit leicht in diese Teile einsteckbar oder - z.B. in Form eines Hülse - auf diese Teile aufsetzbar ist. Der zweite Abschnitt kann hingegen optimal an ein anderes Bauteil, vorzugsweise an den Formeinsatz oder eine Formnestplatte - angepasst sein, sodass eine problemlose Montage gewährleistet wird. Der Flansch kann als Stützflansch fungieren, wobei die Unterseite des Flansches auf dem Formeinsätzen aufliegt und die Oberseite des Flansches an dem Materialrohr, dem Düsenmundstück oder der Wärmeleithülse anliegt. Insgesamt schafft eine solche Geometrie ein Bauteil, dessen Abmessungen bei minimaler Baugröße optimal der Geometrie der Spritzgießdüse sowie des Formeinsatzes angepasst werden können.

Besonders vorteilhaft ist es, wenn der erste Abschnitt von dem ersten Teil gebildet ist und der zweite Abschnitt von dem zweiten Teil gebildet ist. In diesem Fall können die verwendeten Materialien für den ersten Abschnitt und den zweiten Abschnitt gezielt entsprechend den jeweils herrschenden Anforderungen ausgewählt werden.

Dies ist nach Ausführungsformen insbesondere dann vorteilhaft, wenn es sich bei dem Material des ersten Abschnitts um ein hoch wärmeleitfähiges Material handelt, während das Material des zweiten Abschnitts verschleißfest gewählt wird. Durch den hochwärmeleitfähigen ersten Abschnitt wird die fließfähige Schmelze, die sich im Strömungskanal befindet, bis an das Formnest heran auf einer konstant hohen Temperatur gehalten. Gleichzeitig werden die stärker mechanisch und abrasiv belasteten Bereiche am zweiten Abschnitt des Einsatzes durch das verschleißfeste Material vor Abnutzung geschützt. Weist dabei entsprechend einer Ausführungsform das verschleißfeste Material eine niedrige Wärmeleitfähigkeit auf, findet außerdem eine thermische Trennung der Spritzgießdüse von dem in der Regel temperierten Formeinsatz statt. Durch die thermische Isolierung wird ein Abkühlen der Schmelze im Bereich des zweiten Abschnitts wirksam vermieden werden.

In einer weiteren speziellen Ausführungsform wird der Flansch von dem ersten Teil oder dem zweiten Teil gebildet. In beiden Varianten ist der Flansch einheitlich aus einem Material gebildet und weist die Eigenschaften des jeweiligen Materials auf. Auf diese Weise kann der Flansch beispielsweise entweder die wärmeleitende Funktion des ersten Abschnitts fortsetzen oder den durch das verschleißfeste Material geschützten Bereich des zweiten Abschnitts vergrößern.

Gemäß einer anderen Ausführungsform wird der Flansch von dem ersten Teil und dem zweiten Teil gebildet. Auf diese Weise können die Eigenschaften beider Materialien auf engstem Raum optimal kombiniert werden. Da der Flansch hauptsächlich als Stützflansch fungiert, weist dieser sowohl Bereiche auf, die Kontakt zu dem Formeinsatz haben, als auch Bereiche, die je nach Bedarf am Materialrohr, dem Düsenmundstück und/oder der Wärmeleithülse anliegen können. In beiden Bereichen des Flansches müssen dabei unterschiedliche Anforderungen erfüllt werden. Während die Temperatur im Übergangsbereich zwischen Flansch und erstem Abschnitt konstant hoch gehalten wird, ist gleichzeitig der Wärmeübergang vom Materialrohr, dem Düsenmundstück oder der Wärmeleithülse auf den Formeinsatz minimal. Zudem muss gerade an den Berührungsflächen von einer stärkeren Abnutzungsbelastung ausgegangen werden, sodass an diesen Stellen ein stärkerer Verschleißschutz gewährleistet ist. Da die beiden Teile aus den verschiedenen Materialien den Flansch ausbilden, können diese gegensätzlichen Anforderungen in einem Bauteil auf kleinstem Raum gleichzeitig erfüllt werden. Dies gilt insbesondere auch für den gesamten Einsatz.

Nach einer weiteren vorteilhaften Ausführungsform bildet der Einsatz einen Zentrierkörper für eine Ventilnadel einer Spritzgussdüse. Dabei bildet der Einsatz im ersten Teil eine in Richtung des zweiten Halsabschnitts konisch zulaufende Wandung des Strömungskanals. Eine solche Wandung zentriert die Verschlussnadel während der Schließbewegung, sodass das freie Ende der Verschlussnadel stets präzise in ihren Dichtsitz einlaufen kann. Bevorzugt ist dabei der Verlauf des Strömungskanals im Bereich des ersten Teils so ausgeführt, dass die Verschlussnadel bereits auf die Angussöffnung des Einsatzes ausgerichtet wird. Somit wird ein übermäßiger Verschleiß der Verschlussnadel zusätzlich vermieden.

Nach einer weiteren wichtigen Ausführungsform bildet der zweite Teil einen Dichtsitz für eine Ventilnadel einer Spritzgießdüse. Dies kann beispielsweise durch Anpassung des Durchmessers des Strömungskanals im Bereich des zweiten Abschnitts an den Umfang der Ventilnadel einer Nadelverschlussdüse erreicht werden. Entsprechende Ausführungsformen haben den Vorteil, dass der Verschleiß des Einsatzes im Bereich des zweiten Abschnitts, verursacht durch wiederholtes Abgleiten der Ventilnadel entlang der Oberflächen des Strömungskanals, im Bereich des zweiten Abschnitts deutlich reduziert wird.

Nach einer weiteren Ausführungsform ist der zweite Teil des Einsatzes dazu ausgebildet, mit dem vorderen Ende einen Abschnitt einer Wandung eines Formnestes zu bilden.

Nach einer weiteren Ausführungsform ist der zweite Teil dazu ausgebildet, entlang seines äußeren Umfangs mit dem Formeinsatz mindestens eine Dichtfläche zu bilden, wobei der zweite Teil im Bereich der Dichtfläche mindestens einen Einschnitt aufweist. Dabei kann sich der Einschnitt beispielsweise über den gesamten Umfang des zweiten Teils erstrecken. Durch den Einschnitt wird im Bereich der Dichtfläche ein Hohlraum erzeugt, welcher eine zumindest teilweise thermische Isolierung des zweiten Teils des Einsatzes von dem in der Regel temperierten Formeinsatz ermöglicht. Hierdurch wird das Abkühlen der Kunststoffschmelze im Bereich des zweiten Abschnitts des Einsatzes aufgrund eines thermischen Austauschs mit dem Formeinsatz weiter vermindert.

Des Weiteren betrifft die Erfindung eine Spritzgießdüse für ein Spritzgießwerkzeug mit einem erfindungsgemäßen Einsatz. Bei der Spritzgießdüse kann es sich sowohl um eine Heißkanaldüse als auch um eine Kaltkanaldüse handeln. Dabei kann der Einsatz sowohl in Spritzgießdüsen mit offenem Anguss und Düsenspitze als auch in Spritzgießdüsen mit Wärmeleithülse und Nadelverschluss Verwendung finden. Spritzgießdüsen mit dem erfindungsgemäßen Einsatz profitieren von der stoffschlüssigen Kombination der verschiedenen Materialien des Einsatzes, d.h. bei der Montage muss nur ein einziges Bauteil gehandhabt werden. Durch die stoffschlüssige Verbindung der aus zwei unterschiedlichen Materialien bestehenden Teile des Einsatzes können die vorteilhaften Eigenschaften der Materialien punktgenau und auf kleinstem Bauraum bestmöglich genutzt werden.

Dadurch kann beispielsweise bei Verwendung eines hoch wärmeleitfähigen Materials im ersten Teil und eines verschleißfesten Materials im zweiten Teil bei der Zuführung der Schmelze innerhalb der Düsenspitze bis zum Formeinsatz eine optimale Temperaturverteilung erreicht werden wobei die ausgezeichnete Verschleißschutzeigenschaft des zweiten Materials gleichzeitig längere Betriebszeiten ermöglicht. Da zwischen den Teilen des Einsatzes eine feste Verbindung besteht, die selbst hohen Wechselbelastungen durch Abkühlung und Aufheizen des Werkzeugs standhält, wird nicht nur die komplizierte und aufwendige Handhabung durch den Einbau mehrerer Einzelteile vermieden, sondern auch eine langlebige und damit kostengünstige Spritzgießdüse bereit gestellt.

Handelt es sich bei der Spritzgießdüse, um eine Nadelverschlussdüse, hat dies zudem den Vorteil, dass der Einsatz zusätzlich als Zentrierkörper fungiert, weil die Nadel innerhalb des Einsatzes lagestabil und präzise geführt wird. Dabei werden Beschädigungen an der Verschlussnadel aber auch Abrasionen am Einsatz vermieden. Wird dabei zusätzlich der zweite Teil des Einsatzes aus einem verschleißfesten Material gefertigt, werden insbesondere an diesem Teil die unerwünschten Abnutzungserscheinungen reduziert.

Die Spritzgießdüse selbst kann in verschiedenen Ausführungsformen verschiedene Bestandteile umfassen. Alle Ausführungsformen der Spritzgießdüse weisen ein Materialrohr auf, in dem wenigstens ein Strömungskanal ausgebildet ist, der mit einer von wenigstens einem Formeinsatz gebildeten Formkavität des Spritzgießwerkzeugs strömungsverbunden ist.

Je nach Ausführungsform weist die Spritzgießdüse zudem ein eine Wärmeleithülse auf, welche als Düsenmundstück ausgeführt sein kann. Die Wärmeleithülse wird endseitig in das Materialrohr eingesetzt oder auf das Materialrohr aufgesetzt und bildet die Austrittsöffnung für den Strömungskanal. Die Wärmeleithülse wird dabei aus einem hochwärmeleitfähigen Material gefertigt damit die Schmelze mit konstant hoher Temperatur dem Formeinsatz zugeführt werden kann, ohne dass ein sogenannter kalter Pfropfen ensteht.

Der erfindungsgemäße Einsatz ist an dem formeinsatzseitigen Ende des Materialrohrs anordenbar, wobei der Einsatz formeinsatzseitig direkt in oder an dem Materialrohr oder in oder an einer separaten Wärmeleithülse anordenbar ist. Dabei spielt es keine Rolle oder der Einsatz in das Materialrohr oder die Wärmeleithülse eingesetzt oder aufgesetzt ist. Der erste Teil des Einsatzkörpers ist dazu entsprechend angepasst. Der Einsatz ist weiterhin getrennt von den restlichen Bestandteilen der Spritzgießdüse ausgebildet und stellt einen separaten Bestandteil der Spritzgießdüse dar. Auf diese Weise können die beiden Materialien des Einsatzes unabhängig von den Materialien der anderen Bestandteile der Spritzgießdüse gewählt werden und individuell die jeweiligen Anforderungen angepasst werden.

Erfindungsgemäß ist der Einsatz längsverschieblich in Bezug auf das Materialrohr und den Formeinsatz ausgebildet und, in besonders vorteilhafter Weise, während des Betriebes der Spritzgießdüse - d.h. sobald das Werkzeug seine Betriebstemperatur erreicht hat - zwischen dem Materialrohr und dem Formeinsatz, dem Düsenmundstück und dem Formeinsatz oder zwischen der Wärmeleithülse und dem Formeinsatz eingeklemmt. Durch den längsverschieblichen Sitz ist es möglich, den Einsatz schnell und bequem ein- und auszubauen. Hierzu sind keine Werkzeuge oder sonstigen Hilfsmittel erforderlich. Auch zur Befestigung des Einsatzes in der Spritzgießdüse sind keine zusätzlichen Teile oder Hilfsmittel, wie beispielsweise Schraubgewinde, Schraubhülsen o.dgl. am Einsatz selbst oder in der Spritzgießdüse vorgesehen werden, weil der Einsatz während des Betriebes der Spritzgießdüse durch Einklemmen zuverlässig gesichert ist. Der Austausch des Einsatzes kann dennoch stets schnell und kostengünstig erfolgen.

Des Weiteren ist es vorteilhaft wenn der erste Teil zumindest abschnittsweise dem Materialrohr, dem Düsenmundstück oder der Wärmeleithülse formangepasst ist und der zweite Teil zumindest abschnittsweise dem Formeinsatz formangepasst ist. Durch die Formanpassung wird eine stets dichte Verbindung erreicht und damit verhindert, dass Schmelze in Zwischenräume gelangen kann, wobei stets eine Längsbewegung des Einsatzes möglich bleibt, um thermisch bedingte Lageänderungen der Spritzgießdüse ausgleichen zu können. Der Einsatz bildet somit mit den anderen Teilen der Spritzgießdüse ein Stecksystem, aus dem der Einsatz leicht durch Herausziehen werkzeuglos entnommen werden kann, gleichzeitig aber während des Betriebs der Spritzgießdüse zuverlässig durch Einklemmen gesichert ist.

Weitere Merkmale, Einzelheiten und Vorteile der Erfindung ergeben sich aus dem Wortlaut der Ansprüche sowie aus der folgenden Beschreibung von Ausführungsbeispielen und den beispielhaft in den Zeichnungen dargestellten Ausführungsformen. Es zeigen
- Fig. 1: einen schematischen Längsschnitt durch eine erste Ausführungsform eines erfindungsgemäßen Einsatzes;
- Fig. 2: einen schematischen Längsschnitt durch eine andere Ausführungsform eines erfindungsgemäßen Einsatzes; und
- Fig. 3: eine Ausschnittsvergrößerung eines schematischen Längsschnitts durch eine noch andere Ausführungsform eines erfindungsgemäßen Einsatzes.

Bei der Verarbeitung von Duroplasten und Elastomeren, wo der Kunststoff unter Temperatureinfluss aushärtet, werden anstelle von Heißkanalsystemen entsprechend Kaltkanalsysteme eingesetzt. Wenn daher nachfolgend Heißkanalsysteme beschrieben werden, so sind damit -je nach Anwendung - sinngemäß stets auch Kaltkanalsysteme gemeint.

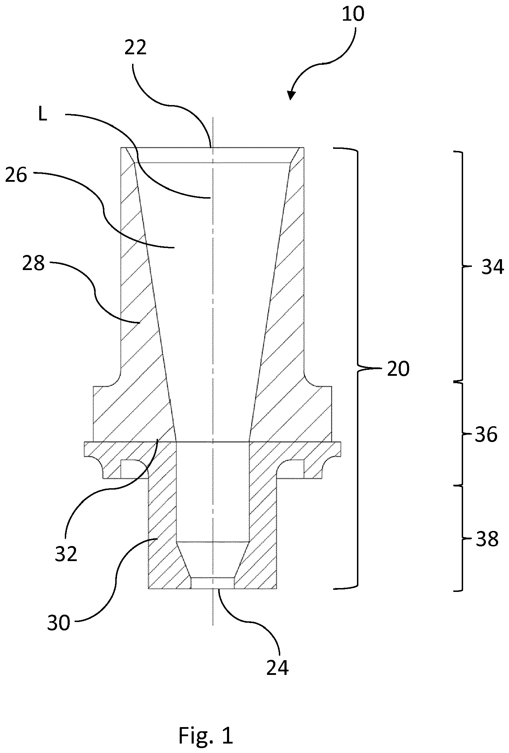

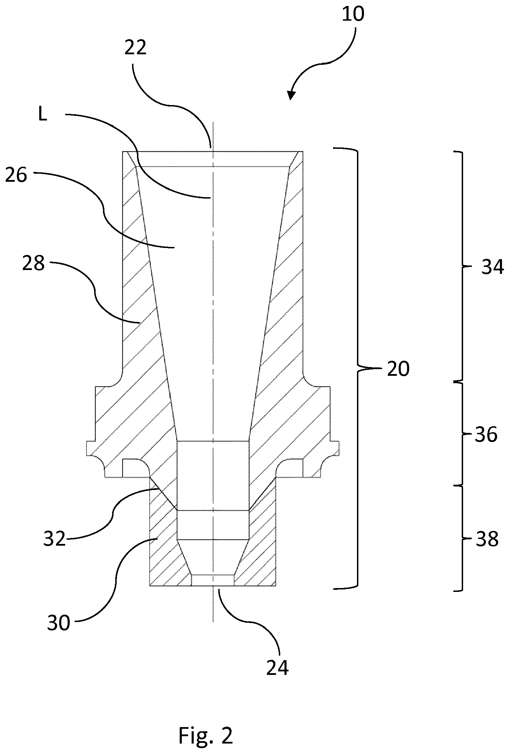

Die Fig. 1 und 2 zeigen jeweils einen Längsschnitt durch einen Einsatz 10 für eine Spritzgießdüse (nicht dargestellt). Der Einsatz 10 wird jeweils durch einen entsprechenden Einsatzkörper 20 gebildet. Dabei weist der Einsatzkörper 20 einen ersten Teil 28 mit einem rückwärtigen Ende 22 auf, welches an einer Spritzgießdüse angeordnet werden kann, beispielsweise durch Einsetzen in die Spritzgießdüse oder durch aufsetzen auf die Spritzgießdüse. Ferner weist der Einsatzkörper 20 einen zweiten Teil 30 mit einem vorderen Ende 24 auf, welcher zum Einsetzen in einen Formeinsatz angepasst ist. Vorzugsweise ist dabei der zweite Teil so ausgeführt, dass er endseitig einen Abschnitt der Formnestwandung eines Spritzgießwerkzeugs bildet.

Der erste Teil 28 des Einsatzkörpers 20 ist dabei entlang einer Kontaktfläche 32 mit dem zweiten Teil 30 des Einsatzkörpers 20 stoffschlüssig oder formschlüssig verbunden. Eine stoffschlüssige Verbindung zwischen dem ersten Teil 28 des Einsatzkörpers 20 und dem zweiten Teil 30 des Einsatzkörpers 20 kann beispielsweise durch Verschweißen der beiden Teile entlang der Kontaktfläche 32, insbesondere durch Diffusionsschweißen hergestellt werden. Eine Formschlüssige Verbindung könnte beispielsweise durch Verwendung einer entsprechenden mechanischen Anordnung, wie beispielsweise eines Schraubgewindes, einer Presspassung oder eines Bajonettverschlusses gewährleistet werden. Der erste Teil 28 des Einsatzkörpers 20 kann dabei beispielsweise aus einem Material bestehen, welches eine hohe thermische Leitfähigkeit aufweist, während der zweite Teil 30 des Einsatzkörpers 20 aus einem Material besteht kann, welches eine hohe Verschleißfestigkeit aufweist. Beispielsweise kann der zweite Teil 30 des Einsatzkörpers 20 aus Werkzeugstahl ausgeführt sein.

Der in der Fig. 1 dargestellte Einsatz 10 ist um eine Längsachse L des Einsatzes 10 rotationssymmetrisch ausgeführt und weist einen ersten Halsabschnitt 34 auf, welcher an dem rückwärtigen Ende 22 angeordnet ist, sowie einen zweiten Halsabschnitt 38, welcher an dem vorderen Ende 24 angeordnet ist. Dabei ist der erste Halsabschnitt 34 derart ausgeführt, dass der Einsatz 10 mit dem ersten Halsabschnitt 34 in das Materialrohr, das Düsenmundstück oder die Wärmeleithülse einer Spritzgussdüse eingesetzt werden kann. Gleichzeitig ist der zweite Halsabschnitt 38 so angepasst, dass er in den Formeinsatz eines Spritzgusswerkzeugs eingesetzt werden kann. Zwischen dem ersten Halsabschnitt 34 und dem zweiten Halsabschnitt 38 ist ein Flansch 36 vorgesehen, welcher beispielsweise als Stützflansch genutzt werden kann. Dabei liegt die Unterseite des Flansches 36 auf dem Formeinsatz eines Spritzgusswerkzeugs auf, während die Oberseite des Flansches an dem Materialrohr, dem Düsenmundstück oder der Wärmeleithülse einer Spritzgussdüse anliegt.

Wie in der Fig. 1 dargestellt ist, verläuft die Kontaktfläche 32, in radialer Richtung senkrecht zur Längsachse L des Einsatzes 10 durch den Flansch 36. Somit besteht der erste Halsabschnitt ausschließlich aus dem ersten Material, während der zweite Halsabschnitt 38 ausschließlich aus dem zweiten Material besteht. Der Flansch 36 ist hingegen in seiner Materialbeschaffenheit zweigeteilt. In einer hierzu alternativen Ausführungsform, welche in der Fig. 2 dargestellt ist, verläuft die Kontaktfläche 32 unterhalb des Flansches 36. Ferner verläuft in der hier dargestellten Ausführungsform die Kontaktfläche schräg zur Längsachse L des Einsatzes 10, sodass sich bei einem rotationsymmetrischen Einsatz 10 ein konischer Verlauf der Kontaktfläche 32 ergibt. In diesem Fall besteht demnach der Flansch 36, sowie der erste Halsabschnitt 34 aus dem ersten Material, während der zweite Halsabschnitt 38 aus dem zweiten Material ausgeführt ist.

Zwischen dem rückwärtigen Ende 22 und dem vorderen Ende 24 erstreckt sich ein Strömungskanal 26 durch den Einsatzkörper 20, welcher zur Förderung einer Kunststoffschmelze zu einem Formeinsatz ausgebildet ist. Der Strömungskanal 26 ist dabei im Bereich des ersten Teils 28 des Einsatzes 10 in Richtung auf das vordere Ende 24 hin konisch zulaufend ausgeführt. Durch den konischen Verlauf des Strömungskanals 26 kann bei Verwendung des Einsatzes in einer Nadelverschlussdüse eine zentrierende Wirkung für den Verschlussteil der Nadel erzielt werden.

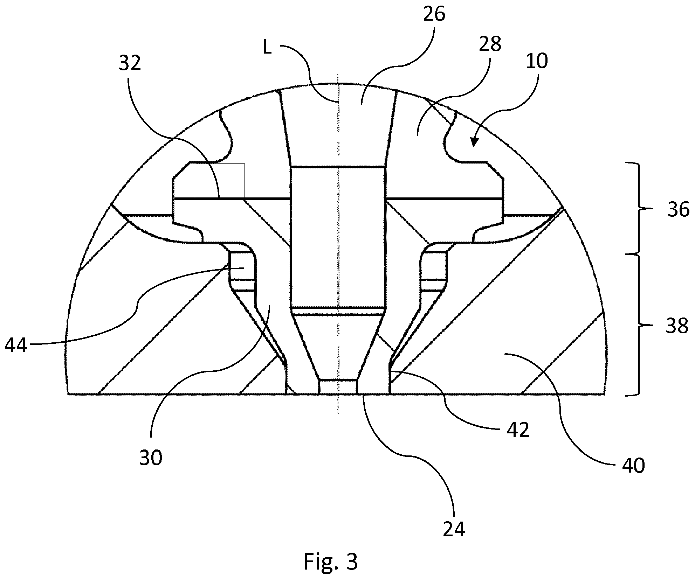

Die Fig. 3 zeigt einen weiteren Längsschnitt durch einen Einsatz 10. In der in Fig. 3 dargestellten Ausführungsform ist der Einsatz 10 in eine entsprechende Öffnung eines Formeinsatzes 40 eines Spritzgusswerkzeugs eingepasst, sodass das vordere Ende 24 des Einsatzes einen Abschnitt der Wandung eines darunterliegenden Formnestes bildet. Wie in der Fig. 3 weiter erkennbar ist, ist der zweite Abschnitt 38 in eine entsprechend Ausnehmung des Formeinsatzes 40 eingesetzt, während der Flansch 36 auf der Oberseite des Formeinsatzes 40 abgestützt ist. Durch eine Anpassung der Größe der Ausnehmung des Formeinsatzes 40 an den Umfang des Einsatzes 10 im Bereich des zweiten Abschnitts 38 kann wie in der Fig. 3 dargestellt ist eine Dichtfläche 42 zwischen dem Einsatz 10 und dem Formeinsatz 40 geschaffen werden. Durch die Dichtfläche 42 kann bei einem Spritzgießvorgang ein zurückströmen des eingespritzten Kunststoffs in den Bereich zwischen dem Einsatz 10 und dem Formeinsatz 40 vermieden werden.

Dabei ist entsprechend der in Fig. 3 dargestellten Ausführungsform ein Einschnitt 44 in dem zweiten Abschnitt 38 des Einsatzes 10 vorgesehen. Durch den Einschnitt 44 wird zwischen dem Formeinsatz 40 und dem zweiten Abschnitt 38 des Einsatzes 10 ein Luftspalt erzeugt, welcher eine zumindest teilweise thermische Isolierung des Einsatzes 10 gegenüber dem Formeinsatz 40 im Bereich des zweiten Abschnitts 38 ermöglicht. Somit könnte durch den Einschnitt 44 und den hierdurch entstehenden Luftspalt zwischen dem Einsatz 10 und dem Formeinsatz 40 eine Wärmeübertragung zwischen dem Formeinsatz 40 und dem Einsatz 10 und damit auch zwischen dem Formeinsatz 40 und der in dem Strömungskanal 26 befindlichen Kunststoffschmelze vermieden werden.

Man erkennt, dass ein Einsatz 10 für das untere Ende einer Spritzgießdüse einen Einsatzkörper 20 aufweist, der ein rückwärtiges Ende 22 und ein vorderes Ende 24 hat und in dem zwischen dem rückwärtigen Ende 22 und dem vorderen Ende 24 wenigstens ein Strömungskanal 26 ausgebildet ist. Der Einsatzkörper 20 weist dabei einen ersten Teil 28 zum Anordnen des Einsatzes an oder in der Spritzgießdüse und einen zweiten Teil 30 zum Anordnen an oder in einem Formeinsatz 40 auf. Erfindungsgemäß ist der erste Teil 28 aus einem ersten Material gefertigt und erstreckt sich von dem rückwärtigen Ende 22 des Einsatzkörpers 20 bis zu einer Kontaktfläche 32. Der zweite Teil 30 ist aus einem von dem ersten Material verschiedenen Material gefertigt und erstreckt sich von der Kontaktfläche 32 bis zum vorderen Ende 24 des Einsatzkörpers 20. Der erste Teil 28 und der zweite Teil 30 sind ferner in und/oder entlang der Kontaktfläche 32 fest miteinander verbunden.

### Bezugszeichenliste

- L: Längsachse
- 10: Einsatz
- 20: Einsatzkörper
- 22: rückwärtiges Ende
- 24: vorderes Ende
- 26: Strömungskanal
- 28: erster Teil
- 30: zweiter Teil
- 32: Kontaktfläche
- 34: erster Halsabschnitt
- 36: Flansch
- 38: zweiter Halsabschnitt
- 40: Formeinsatz
- 42: Dichtfläche
- 44: Einschnitt

## Patentansprüche

1. Spritzgießdüse für ein Spritzgießwerkzeug,
a) mit einem Materialrohr, in dem wenigstens ein Strömungskanal ausgebildet ist, der mit einer von wenigstens einem Formeinsatz (40) gebildeten Formkavität des Spritzgießwerkzeugs strömungsverbunden ist, und
b) mit einem Einsatz (10), wobei der Einsatz (10) an dem formeinsatzseitigen Ende des Materialrohrs anordenbar ist,
c) wobei der Einsatz (10) einen Einsatzkörper (20) hat, der ein rückwärtiges Ende (22) und ein vorderes Ende (24) aufweist und in dem zwischen dem rückwärtigen Ende (22) und dem vorderen Ende (24) wenigstens ein Strömungskanal (26) ausgebildet ist,
d) wobei der Einsatzkörper (20) einen ersten Teil (28) zum Anordnen des Einsatzes (10) an oder in der Spritzgießdüse und einen zweiten Teil (30) zum Anordnen an oder in dem Formeinsatz (40) aufweist,
e) wobei der erste Teil (28) aus einem ersten Material gefertigt ist und sich von dem rückwärtigen Ende (22) des Einsatzkörpers (20) bis zu einer Kontaktfläche (32) erstreckt und wobei der zweite Teil (30) aus einem von dem ersten Material verschiedenen Material gefertigt ist und sich von der Kontaktfläche (32) bis zum vorderen Ende (24) des Einsatzkörpers (20) erstreckt,
f) wobei der erste Teil (28) und der zweite Teil (30) in und/oder entlang der Kontaktfläche (32) miteinander verbunden sind,
**dadurch gekennzeichnet,**
g) **dass** der Einsatz (10) längsverschieblich in Bezug auf das Materialrohr und den Formeinsatz (40) ausgebildet ist.

2. Spritzgießdüse nach Anspruch 1, **dadurch gekennzeichnet, dass** die Spritzgießdüse eine Wärmeleithülse aufweist an deren formeinsatzseitigen Ende der Einsatz (10) anordenbar ist.

3. Spritzgießdüse nach Anspruch 1 oder 2, **dadurch gekennzeichnet, dass** der Einsatz (10) längsverschieblich in Bezug auf das Düsenmundstück oder die Wärmeleithülse und den Formeinsatz (40) ausgebildet ist und während des Betriebes der Spritzgießdüse zwischen dem Materialrohr und dem Formeinsatz (40), dem Düsenmundstück und dem Formeinsatz (40) oder zwischen der Wärmeleithülse und dem Formeinsatz (40) eingeklemmt ist.

4. Spritzgießdüse nach einem der vorhergehenden Ansprüche, **dadurch gekennzeichnet, dass** der erste Teil zumindest abschnittsweise dem Materialrohr, dem Düsenmundstück oder der Wärmeleithülse formangepasst ist und der zweite Abschnitt zumindest abschnittsweise dem Formeinsatz (40) formangepasst ist.

5. Spritzgießdüse nach einem der vorhergehenden Ansprüche, **dadurch gekennzeichnet, dass** der erste Teil (28) des Einsatzes (10) einen höheren Wärmeausdehnungskoeffizienten aufweist als das Materialrohr und/oder das Düsenmundstück und/oder die Wärmeleithülse.

## Claims

1. Injection-moulding nozzle for an injection mould,
a) with a material tube in which at least one flow duct is formed which is connected in terms of flow to a mould cavity of the injection mould formed by at least one mould insert (40), and
b) with an insert (10), wherein the insert (10) can be arranged on the mould insert side end of the material tube,
c) wherein the insert (10) has an insert body (20) which has a rear end (22) and a front end (24) and in which at least one flow duct (26) is formed between the rear end (22) and the front end (24),
d) wherein the insert body (20) has a first part (28) for arranging the insert (10) on or in the injection moulding nozzle and second part (30) for arranging on or in the mould insert (40),
e) wherein the first part (28) is made from a first material and extends from the rear end (22) of the insert body (20) up to a contact surface (32) and wherein the second part (30) is made from a material different from the first material and extends from the contact surface (32) up to the front end (24) of the insert body (20),
f) wherein the first part (28) and the second part (30) are connected to one another in and/or along the contact surface (32),
**characterised in that**
g) the insert (10) is designed to be longitudinally displaceable in relation to the material tube and the mould insert (40).

2. Injection-moulding nozzle according to claim 1, **characterised in that** the injection moulding nozzle has a heat conducting sleeve, at the mould insert side end of which the insert (10) can be arranged.

3. Injection-moulding nozzle according to claim 1 or 2, **characterised in that** the insert (10) is configured so as to be longitudinally displaceable with regard to the nozzle mouthpiece or the heat conducting sleeve and the mould insert (40) and during the operation of the injection-moulding nozzle is clamped in place between the material tube and the mould insert (40), the nozzle mouthpiece and the mould insert (40) or between the heat conducting sleeve and the mould insert (40).

4. Injection-moulding nozzle according to any of the preceding claims, **characterised in that** the first part is adapted in form at least in part to the material tube, the nozzle mouthpiece or the heat conducting sleeve and the second part is adapted in form at least in part to the mould insert (40).

5. Injection-moulding nozzle according to any of the preceding claims, **characterised in that** the first part (28) of the insert (10) has a greater coefficient of thermal expansion than the material tube and/or the nozzle mouthpiece and/or the heat conducting sleeve.

## Revendications

1. Buse de moulage par injection pour un outil de moulage par injection,
a) avec un tube de matériau, dans lequel au moins un canal d'écoulement est réalisé, qui est relié fluidiquement à une cavité de moule de l'outil de moulage par injection formée par au moins un insert de moule (40), et
b) avec un insert (10), dans laquelle l'insert (10) peut être agencé à l'extrémité côté insert de moule du tube de matériau,
c) dans laquelle l'insert (10) a un corps d'insert (20), qui présente une extrémité arrière (22) et une extrémité avant (24) et est réalisé dans l'au moins un canal d'écoulement (26) entre l'extrémité arrière (22) et l'extrémité avant (24),
d) dans laquelle le corps d'insert (20) présente une première partie (28) pour l'agencement de l'insert (10) au niveau de ou dans la buse de moulage par injection et une deuxième partie (30) pour l'agencement au niveau de ou dans l'insert de moule (40),
e) dans laquelle la première partie (28) est fabriquée en un premier matériau et s'étend de l'extrémité arrière (22) du corps d'insert (20) jusqu'à une surface de contact (32) et dans laquelle la deuxième partie (30) est fabriquée en un matériau différent du premier matériau et s'étend de la surface de contact (32) jusqu'à l'extrémité avant (24) du corps d'insert (20),
f) dans laquelle la première partie (28) et la deuxième partie (30) sont reliées l'une à l'autre dans et/ou le long de la surface de contact (32),
**caractérisée en ce**
g) **que** l'insert (10) est réalisé longitudinalement mobile par rapport au tube de matériau et à l'insert de moule (40).

2. Buse de moulage par injection selon la revendication 1, **caractérisée en ce que** la buse de moulage par injection présente une douille de conduction de chaleur à laquelle, au niveau de son extrémité côté insert de moule, l'insert (10) peut être agencé.

3. Buse de moulage par injection selon la revendication 1 ou 2, **caractérisée en ce que** l'insert (10) est réalisé longitudinalement mobile par rapport à l'embout de buse ou à la douille de conduction de chaleur et à l'insert de moule (40) et est coincé pendant le fonctionnement de la buse de moulage par injection entre le tube de matériau et l'insert de moule (40), l'embout de buse et l'insert de moule (40) ou entre la douille de conduction de chaleur et l'insert de moule (40).

4. Buse de moulage par injection selon l'une quelconque des revendications précédentes, **caractérisée en ce que** la première partie est adaptée au moule au moins par section au tube de matériau, à l'embout de buse ou à la douille de conduction de chaleur et la deuxième section est adaptée au moule au moins par section à l'insert de moule (40).

5. Buse de moulage par injection selon l'une quelconque des revendications précédentes, **caractérisée en ce que** la première partie (28) de l'insert (10) présente un coefficient de dilatation thermique plus élevé que le tube de matériau et/ou l'embout de buse et/ou la douille de conduction de chaleur.
